(19) Europäisches Patentamt
European Patent Office
Office européen des brevets

(11) **EP 4 600 692 A1**

(12) **EUROPEAN PATENT APPLICATION**
published in accordance with Art. 153(4) EPC

(43) Date of publication:
**13.08.2025 Bulletin 2025/33**

(21) Application number: **23875255.4**

(22) Date of filing: **06.10.2023**

(51) International Patent Classification (IPC):
$G01S\ 7/481^{(2006.01)}$    $G02B\ 27/09^{(2006.01)}$
$G01S\ 7/484^{(2006.01)}$    $G01S\ 17/894^{(2020.01)}$
$G01S\ 7/4861^{(2020.01)}$    $G02B\ 5/18^{(2006.01)}$
$G02B\ 27/30^{(2006.01)}$

(52) Cooperative Patent Classification (CPC):
G01S 7/481; G01S 7/484; G01S 7/4861;
G01S 17/894; G02B 5/18; G02B 27/09;
G02B 27/30

(86) International application number:
**PCT/KR2023/015400**

(87) International publication number:
**WO 2024/076194 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.10.2022 KR 20220127869
06.10.2022 KR 20220127870**

(71) Applicant: **LG INNOTEK CO., LTD.
Seoul 07796 (KR)**

(72) Inventors:
• **KIM, Myung Sub
Seoul 07796 (KR)**
• **PARK, Ki Tae
Seoul 07796 (KR)**
• **BAE, Young Seop
Seoul 07796 (KR)**
• **LEE, Hyeon Yong
Seoul 07796 (KR)**

(74) Representative: **Plasseraud IP
104 Rue de Richelieu
CS92104
75080 Paris Cedex 02 (FR)**

(54) **LIGHT OUTPUT DEVICE AND THREE-DIMENSIONAL SENSING DEVICE INCLUDING SAME**

(57) A light output device according to an embodiment of the present invention includes: a plurality of light source arrays sequentially arranged along a first direction perpendicular to an optical axis direction; a collimation lens arranged on the plurality of light source arrays; and a diffusion member disposed on the collimation lens, wherein each light source array includes a plurality of channels sequentially arranged along a second direction perpendicular to the optical axis direction and the first direction, each of the plurality of light source arrays is configured to be independently operated, and each of the plurality of channels is configured to be independently operated.

FIG. 3

EP 4 600 692 A1

**Description**

[Technical Field]

The present invention relates to a light output device and a three-dimensional sensing device including the same.

[Background Art]

Three-dimensional content is applied in many fields such as games, culture, education, manufacturing, and autonomous driving, and depth information (a depth map) is required to obtain three-dimensional content. Depth information is information that represents distance in space, that is, perspective information for one point with respect to another point in a two-dimensional image. Methods for acquiring depth information include a method of projecting infrared (IR) structured light onto an object, a method using stereo cameras, a time-of-flight (TOF) method, etc.

A light detection and ranging (LiDAR) device, which is an example of a camera device that acquires three-dimensional information, measures the distance to a target object or creates a shape of the target object using laser pulses that are emitted from the LiDAR device, then reflected from the target object, and returned to the LiDAR device. LiDAR devices are applied in various technical fields that require three-dimensional information. For example, a LiDAR device can be applied in various technical fields such as meteorology, aviation, space, and vehicles. Recently, the share of LiDAR devices in the autonomous driving field has been rapidly increasing.

Generally, in a LiDAR device, a light emitting unit generates an output light signal and irradiates an object with the output signal, a light receiving unit receives an input light signal reflected from the object, and an information generating unit generates information on the object using the input light signal received by the light receiving unit.

The light emitting unit of the LiDAR device includes a scanner, and the scanner may scan a region of a preset field of view (FOV). However, when the light emitting unit of the LiDAR device includes a scanner, the size of the LiDAR device may increase, and the reliability of the LiDAR device may decrease.

Meanwhile, when the LiDAR device is a structured light module based on a dot pattern, the resolution of depth information increases as the number of output dots increases. To increase the number of output dots, the number of replicas of a diffractive optical element may be increased. However, as the number of replicas of the diffractive optical element increases, the brightness per dot decreases, and to compensate for this, the output of a light source needs to be increased. However, there are limits to increasing the output of the light source due to issues with power consumption and safety for a user's eyes.

[Disclosure]

[Technical Problem]

A technical object to be achieved by the present invention is to provide a light output device and a three-dimensional sensing device which are compact and highly reliable.

A technical object to be achieved by the present invention is to provide a light output device and a three-dimensional sensing device which are capable of adaptively adjusting an angle of view and a sensing distance.

A technical object to be achieved by the present invention is to provide a three-dimensional sensing device having high depth information resolution while being safe for a user's eyes.

[Technical Solution]

A light output device according to an embodiment of the present invention includes: a plurality of light source arrays disposed sequentially in a first direction perpendicular to an optical axis direction; a collimation lens disposed above the plurality of light source arrays; and a diffusion member disposed above the collimation lens, wherein each light source arrays includes a plurality of channels disposed sequentially in a second direction perpendicular to the optical axis direction and the first direction, each of the plurality of light source arrays is set to be operated independently, and each of the plurality of channels is set to be operated independently.

The plurality of light source arrays may include a first light source array and a second light source array, each of the first light source array and the second light source array may include 1st to nth channels disposed sequentially, and the 1st to nth channels of the first light source array may be connected to the 1st to nth channels of the second light source array, respectively, in series.

At least some of the 1st to nth channels of the first light source array may be connected in parallel.

An area of an effective region of the collimation lens may be greater than an area of the plurality of light source arrays.

The diffusion member may include a first surface disposed to face the plurality of light source arrays and a second surface opposite to the first surface, a plurality of convex patterns may be disposed on the first surface, and each of the plurality of convex patterns may have a long axis in a direction parallel to the second direction.

The plurality of light source arrays may be implemented on a single chip.

A three-dimensional sensing device according to another embodiment of the present invention includes: a light emitting unit that generates an output light signal and irradiates a target region with the output light signal; a light receiving unit that receives an input light signal reflected from the target region; an information generating unit that generates information on the target region using the input light signal input to the light receiving unit; and a control unit that controls the light emitting unit, the light receiving unit, and the information generating unit, wherein the light emitting unit includes: a plurality of light source arrays disposed sequentially in a first direction perpendicular to an optical axis direction; a collimation lens disposed above the plurality of light source arrays; and a diffusion member disposed above the collimation lens, wherein each light source array includes a plurality of channels disposed sequentially in a second direction perpendicular to the optical axis direction and the first direction, each of the plurality of light source arrays is set to be operated independently, and each of the plurality of channels is set to be operated independently.

The control unit may control at least one of the number of operated light source arrays among the plurality of light source arrays and the number of operated channels among the plurality of channels.

The control unit may control the number of operated light source arrays among the plurality of light source arrays according to a measurement distance to the target region.

The control unit may control the number of operated channels among the plurality of channels according to a required angle of view in the second direction.

The diffusion member may include a first surface disposed to face the plurality of light source arrays and a second surface opposite to the first surface, a plurality of convex patterns may be disposed on the first surface, and each of the plurality of convex patterns may have a long axis in a direction parallel to the second direction.

An angle of view in the first direction may vary depending on a shape of the plurality of convex patterns of the diffusion member.

A three-dimensional sensing device according to still another embodiment of the present invention includes: a light emitting unit that generates an output light signal and irradiates a target region with the output light signal; a light receiving unit that receives an input light signal reflected from the target region; an information generating unit that generates information on the target region using the input light signal input to the light receiving unit; and a control unit that controls the light emitting unit, the light receiving unit, and the information generating unit, wherein the light emitting unit includes: a plurality of light source arrays that are disposed in a matrix form and operated by a plurality of first signal lines through which electrical signals are applied in a first direction and a plurality of second signal lines through which electrical signals are applied in a second direction perpendicular to the first direction; a lens group disposed above the plurality of light source arrays; and an optical member disposed above the lens group, wherein control unit sequentially operates different light source arrays in the plurality of light source arrays using some of the plurality of first signal lines and some of the plurality of second signal lines, and the information generating unit synthesizes input light signals for the sequentially operated different light source arrays to generate depth information on the target region.

The optical member may include a diffractive optical element (DOE), and the output light signal is a dot pattern replicated by the diffractive optical element, and the output light signals from the sequentially operated different light source arrays may be radiated not to overlap in the target region.

The control unit may control the number of sequentially operated different light source arrays according to a distance to the target region.

The lens group may include a collimation lens, and an area of an effective region of the collimation lens may be greater than an area of the plurality of light source arrays.

The optical member may include a DOE disposed in a first region of the plurality of light source arrays and a diffusion member disposed in a second region of the plurality of light source arrays.

The above control unit may control the light source arrays in the first region and the light source arrays in the second region to be operated sequentially.

Output light signals output from the light source arrays in the second region may be a surface pattern diffused by the diffusion member.

The information generating unit may synthesize input light signals for the light source array in the first region and the light source arrays in the second region to generate information on the target region.

[Advantageous Effects]

According to embodiments of the present invention, it is possible to obtain a light output device and a three-dimensional sensing device which are compact and highly reliable. According to embodiments of the present invention, it is possible to obtain a light output device and a three-dimensional sensing device capable of adaptively adjusting an angle of view and a sensing distance. According to embodiments of the present invention, it is possible to obtain a light output device and a three-dimensional sensing device that are capable of adjusting an angle of view without a scanner including micro-electro mechanical systems (MEMS), a mirror, etc., and has a fast response speed and excellent power efficiency.

According to embodiments of the present invention, it is possible to obtain a three-dimensional sensing device having high depth information resolution while being safe for a user's eyes.

[Description of Drawings]

FIG. 1 is a block diagram of a three-dimensional sensing device according to one embodiment of the present invention.

FIG. 2 is a conceptual cross-sectional view of the three-dimensional sensing device according to one embodiment of the present invention.

FIG. 3 is a view describing the correspondence relationship between a plurality of light source arrays and image sensors included in one embodiment of the present invention.

FIGS. 4A to 4C are perspective views of a diffusion member included in a light emitting unit according to one embodiment of the present invention.

FIG. 5 shows an example in which the areas of the plurality of light source arrays and a lens group are compared according to the embodiment of the present invention.

FIG. 6A shows a result of simulating an angle of view in a second direction when $26^{th}$ to $31^{st}$ channels among $1^{st}$ to $56^{th}$ channels are operated, and FIG. 6B shows a result of simulating the angle of view in the second direction when all the $1^{st}$ to $56^{th}$ channels are operated.

FIG. 7 shows a result of simulating an output according to the number of operated light source arrays among the plurality of light source arrays according to the embodiment of the present invention.

FIG. 8 is a conceptual diagram of a light source included in another embodiment of the present invention.

FIG. 9 is a layout diagram of a light source according to another embodiment of the present invention.

FIGS. 10A to 10G show examples of dot patterns output from the light source of FIG. 9.

FIG. 11 is a view describing the principle of generating depth information using a dot pattern.

FIG. 12 is a cross-sectional view of a light emitting unit including the light source of FIG. 9.

FIG. 13 shows an application example of a three-dimensional sensing device including the light emitting unit of FIG. 12.

FIG. 14 is a layout diagram of a light source according to still another embodiment of the present invention.

FIGS. 15A to 15D show examples of a surface pattern output from the light source of FIG. 14.

FIG. 16 is a cross-sectional view of a light emitting unit including the light source of FIG. 14.

FIG. 17 shows an example of a diffusion member included in the light emitting unit of FIG. 16.

FIG. 18 shows an application example of a three-dimensional sensing device including the light emitting unit of FIG. 16.

FIG. 19 is an exploded view of a LiDAR device according to an embodiment of the present invention.

[Modes of the Invention]

Hereinafter, exemplary embodiments of the present invention will be described in detail with reference to the accompanying drawings.

However, the technical spirit of the present invention is not limited to the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be interpreted with meanings that are generally understood by those skilled in the art to which the present invention pertains unless explicitly specifically defined and described, and the meanings of commonly used terms, such as terms defined in a dictionary, may be interpreted in consideration of their contextual meanings in the related art.

In addition, the terms used in the embodiments of the present invention are for describing the embodiments and are not intended to limit the present invention.

In the specification, a singular form may include a plural form unless the context clearly dictates otherwise, and when "at least one (or one or more) of A, B, and C" is described, it may include one or more of all possible combinations of A, B, and C.

In addition, terms such as "first," "second," "A," "B," "(a)," and "(b)" may be used to describe components of the embodiments of the present invention.

These terms are only for the purpose of distinguishing one component from another component, and the nature, sequence, order, etc. of the components are not limited by these terms.

In addition, when a first component is described as being "connected," "coupled," or "joined" to a second component, it may include not only a case in which the first component is directly connected, coupled, or joined to the second component, but also a case in which the first component is "connected," "coupled," or "joined" to the second component with another component present between the first component and the second component.

In addition, when a first component is described as being formed or disposed "on (above) or below (under)" a second component, "on (above)" or "below (under)" may include not only a case in which the two components are in direct contact with each other, but also a case in which one or more other components are formed or disposed between the two components. In addition, when expressed as "on (above) or below (under)," it may include the meaning of not only an upward direction but also a downward direction based on one component.

A three-dimensional sensing device according to embodiments of the present invention may be a LiDAR device mounted on a vehicle to measure the distance between the vehicle and an object, but the present invention is not limited thereto. A three-dimensional sensing device according to embodiments of the present invention may extract depth information using a time-of-flight (ToF) principle, a frequency modulation continuous wave (FMCW) principle, or a structured light principle. In this specification, a three-dimensional sensing device may be referred to as a LiDAR device, an information generating device, a depth information generating device, or a camera device.

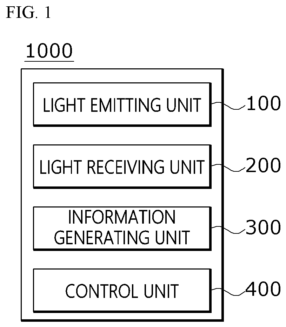

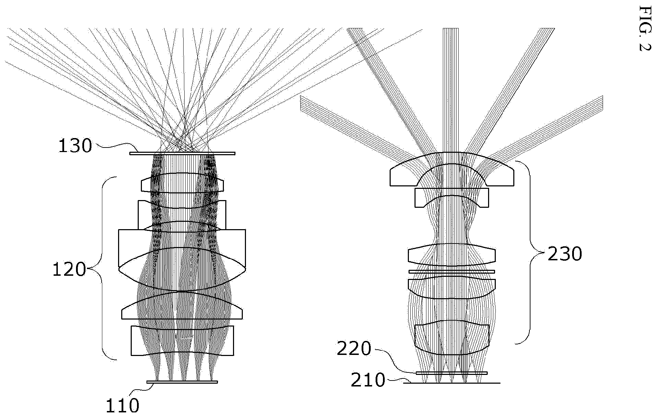

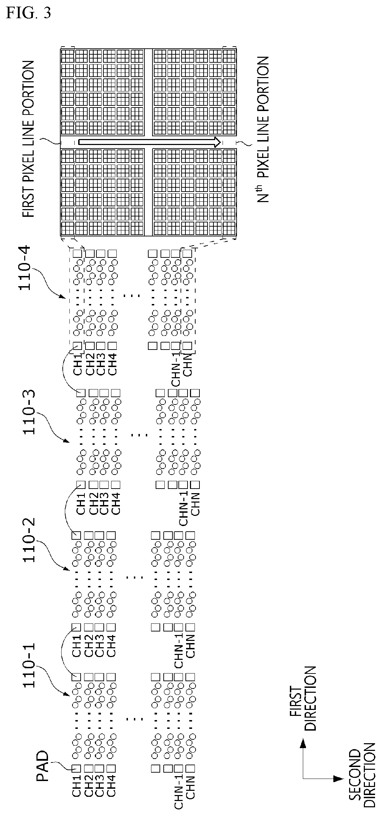

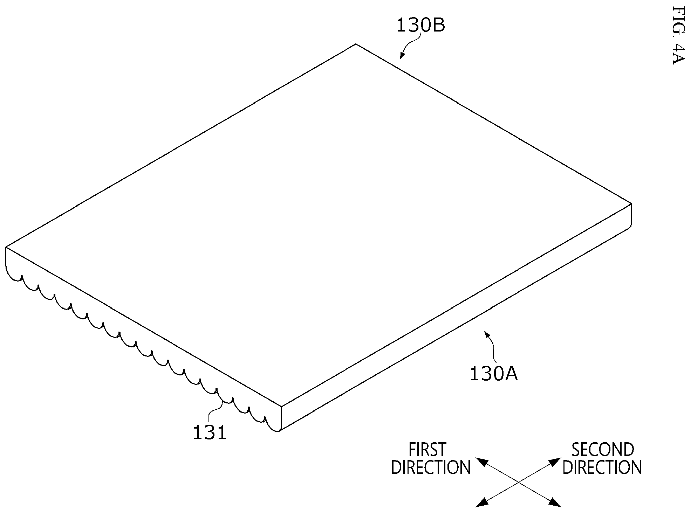

FIG. 1 is a block diagram of a three-dimensional sensing device according to one embodiment of the present invention, FIG. 2 is a conceptual cross-sectional view of the three-dimensional sensing device according to one embodiment of the present invention, FIG. 3 is a view describing the correspondence relationship between a plurality of light source arrays and image sensors included in one embodiment of the present invention, and FIGS. 4A to 4C are perspective views of a diffusion member included in a light emitting unit according to one embodiment of the present invention.

Referring to FIGS. 1 and 2, an information generating device 1000 according to an embodiment of the present invention includes a light emitting unit 100, a light receiving unit 200, a depth information generating unit 300, and a control unit 400.

The light emitting unit 100 may generate and output an output light signal in the form of a pulse wave or a continuous wave. The continuous wave may be in the form of a sinusoid wave or a square wave. Since the output light signal is generated in the form of a pulse wave or a continuous wave, the information generating device 1000 may detect a time difference or a phase difference between an output light signal that is output from the light emitting unit 100 and an input light signal that is reflected from an object and then input to the light receiving unit 200. In this specification, output light may be light that is output from the light emitting unit 100 and is incident on the object, and input light may be light that is output from the light emitting unit 100, reaches the object, is reflected from the object, and is input to the light receiving unit 200. In this specification, the pattern of output light may be referred to as an emission pattern, and the pattern of input light may be referred to as an incidence pattern. From the object's point of view, the output light may be incident light, and the input light may be reflected light.

The light emitting unit 100 may include a light source 110, a lens group 120 disposed above the light source 110, and an optical member 130 disposed above the lens group 120. The light source 110 generates and outputs light. The light generated by the light source 110 may be infrared light having a wavelength in the range of 770 to 3000 nm. Alternatively, the light generated by the light source 110 may be visible light having a wavelength in the range of 380 to 770 nm. A light emitting diode (LED) may be used as the light source 110, which may have a form in which a plurality of light emitting diodes are arranged in a certain pattern. In addition, the light source 110 may include an organic light emitting diode (OLED) or a laser diode (LD). Alternatively, the light source 110 may be a vertical cavity surface emitting laser (VCSEL). The VCSEL is one type of laser diode that converts an electrical signal into an optical signal and may output a signal having a wavelength in the range of about 800 to 1000 nm, for example, a wavelength in the range of about 850 nm or about 940 nm. The light source 110 repeats turning-on/off at regular time intervals and generates an output light signal in the form of a pulse wave or continuous wave. The time interval may be the frequency of the output light signal.

The lens group 120 may collect light output from the light source 110 and output the collected light to the outside. The lens group 120 may be disposed apart from an upper portion of the light source 110 with respect to the light source 110. Here, the upper portion of the light source 110 may be a side through which light is output from the light source 110. The lens group 120 may include at least one lens. When the lens group 120 includes a plurality of lenses, the lenses may be aligned with respect to a central axis to form an optical system. Here, the central axis may be identical to an optical axis of the optical system. According to the embodiment of the present invention, the lens group 120 may include a collimation lens.

The optical member 130 may receive light output from the light source 110 and the lens group 120 and then refract or diffract the received light to output the refracted or diffracted light. Accordingly, the optical member 130 may be referred to as a diffusion member.

The light receiving unit 200 may receive an optical signal reflected from the object. In this case, the received optical signal may be an optical signal that is output by the light emitting unit 100 and reflected from the object.

The light receiving unit 200 may include an image sensor 210, a filter 220 disposed above the image sensor 210, and a lens group 230 disposed above the filter 220. The light signal reflected from the object may pass through the lens group 230. The optical axis of the lens group 230 may be aligned with the optical axis of the image sensor 210. The filter 220 may be disposed between the lens group 230 and the image sensor 210. The filter 220 may be disposed on an optical path between the object and the image sensor 210. The filter 220 may filter light in a predetermined wavelength band. The filter 220 may transmit light in a specific wavelength band. The filter 220 may allow light having a specific wavelength to be passed. For example, the filter 220 may allow light in an infrared band to be passed and block light outside the infrared band. The image sensor 210 may detect light. The image sensor 210 may receive an optical signal. The image sensor 210 may detect an optical signal and output the detected optical signal as an electrical signal. The image sensor 210 may detect light having a wavelength corresponding to the wavelength of light output by the light source 110. For example, the image sensor 210 may detect light in the infrared band.

The image sensor 210 may be formed as a structure in which a plurality of pixels are arranged in the form of a grid. The image sensor 210 may be a complementary metal oxide semiconductor (CMOS) image sensor or a charge coupled device (CCD) image sensor. Additionally, the image sensor 210 may include a ToF sensor that receives infrared (IR) light reflected from the object and measures the distance using a time difference or a phase difference.

The light receiving unit 200 and the light emitting unit 100 may be disposed side by side. The light receiving unit 200 may be disposed next to the light emitting unit 100. The light receiving unit 200 may be disposed in the same direction as the light emitting unit 100.

The information generating unit 300 may generate depth information on the object using the input light signal that is input to the light receiving unit 200. For example, the information generating unit 300 may calculate depth information on the object using the flight time taken for the output light signal light signal that is output from the light emitting unit 100 to be reflected from the object and then input to the light receiving unit 200. For example, the information generating unit 300 may calculate the time difference between the output light signal and the input light signal using the electric signal received by the image sensor 210 and calculate the distance between the object and the three-dimensional sensing device 1000 using the calculated time difference. For example, the information generating unit 300 may calculate the phase difference between the output light signal and the input light signal using the electric signal received from the sensor and calculate the distance between the object and the three-dimensional sensing device 1000 using the calculated phase difference.

The control unit 400 controls the operations of the light emitting unit 100, the light receiving unit 200, and the information generating unit 300. The information generating unit 300 and the control unit 400 may be implemented in the form of a printed circuit board (PCB). Additionally, the information generating unit 300 and the control unit 400 may be implemented in the form of another configuration. Alternatively, the control unit 400 may be included in a terminal or a vehicle in which a three-dimensional sensing device 1000 according to the embodiment of the present invention is disposed. For example, the control unit 400 may be implemented in the form of an application processor (AP) of a smart phone in which the three-dimensional sensing device 1000 according to the embodiment of the present invention is mounted, or in the form of an electronic control unit (ECU) of a vehicle in which the three-dimensional sensing device 1000 according to the embodiment of the present invention is mounted.

The three-dimensional sensing device 1000 according to the embodiment of the present invention may be a solid state LiDAR. Since the solid state LiDAR does not include mechanical parts for rotating the LiDAR device 1000 unlike a mechanical LiDAR that rotates 360°, the solid state LiDAR has advantages of being inexpensive and implemented in a compact form. The three-dimensional sensing device 1000 according to the embodiment of the present invention may be a solid state flash LiDAR. The solid state flash LiDAR uses an optical flash, and a single large-area laser pulse may illuminate the forward environment. However, when implementing high-power long-distance sensing, a scanner may be required, but when the three-dimensional sensing device 1000 includes a scanner, the size of the device may increase and the reliability and response speed may decrease.

According to the embodiment of the present invention, it is intended to control an angle of view and a sensing distance using an addressable light source array.

Referring to FIG. 3, the light source 110 includes a plurality of light source arrays 110-1, 110-2, 110-3, and 110-4 disposed sequentially in a first direction perpendicular to an optical axis direction. For convenience of description, it is illustrated that the number of the plurality of light source arrays is four, but the present invention is not limited thereto, and the number of the plurality of light source arrays may be two or more.

According to the embodiment of the present invention, a first light source array 110-1, a second light source array 110-2, a third light source array 110-3, and a fourth light source array 110-4 may be VCSELs implemented on one chip.

The first light source array 110-1, the second light source array 110-2, the third light source array 110-3, and the fourth light source array 110-4 may be spaced apart from each other. The separation distance between two adjacent light source arrays may be in the range of 10 $\mu$m to 100 $\mu$m, preferably 20 $\mu$m to 80 $\mu$m, and more preferably 30 $\mu$m to 60 $\mu$m.

According to the embodiment of the present invention, each of the first light source array 110-1, the second light source array 110-2, the third light source array 110-3, and the fourth light source array 110-4 may be set to be operated independently.

According to the embodiment of the present invention, each light source array 110-1, 110-2, 110-3, or 110-4 includes a plurality of channels CH1, CH2, ..., and CHN disposed sequentially in a second direction perpendicular to the optical axis direction and the first direction. At both ends of each channel, pads may be disposed for electrical connection. Each of the plurality of channels CH1, CH2, ..., and CHN may be set to be operated independently. Here, each light source array is shown as including 56 channels, but the present invention is not limited thereto.

In this way, the light source 110 according to the embodiment of the present invention includes the plurality of light source arrays, each of the plurality of light source arrays is set to be operated independently, and each of the plurality of channels included in each light source array may be set to be operated independently. Therefore, the light source array may be referred to as an addressable light source array or an addressable VCSEL array.

An output light signal output from at least some of a 1st channel of the first light source array 110-1, a 1st channel of the second light source array 110-2, a 1st channel of the third light source array 110-3, and a 1st channel of the fourth light source array 110-4 may be received by a 1st pixel line portion of the image sensor 210 after being reflected from a target region. An output light signal output from at least some of a 2nd channel of the first light source array 110-1, a 2nd channel of the second light source array 110-2, a 2nd channel of the third light source array 110-3, and a 2nd channel of the fourth light source array 110-4 may be received by a 2nd pixel line portion of the image sensor 210 after being reflected from the target region. Similarly, an output light signal output from at least some of an N-1th channel of the first light source array 110-1, an N-1th channel of the second light source array 110-2, an N-1th channel of the third light source array 110-3, and an N-1th channel of the fourth light source array 110-4 may be received by an N-1th pixel line portion of the image sensor 210 after being reflected from the target region. In addition, an output light signal output from at least some of an Nth channel of the first light source array 110-1, an Nth channel of the second light source array 110-2, an Nth channel of the third light source array 110-3, and an Nth channel of the fourth light source array 110-4 may be received by an Nth pixel line portion of the image sensor 210 after being reflected from the target region. For example, when each light source array includes 56 channels, the image sensor 210 includes $597 \times 165$ pixels, and each pixel line portion includes 3 pixel lines, the 56 channels may be matched to the 56 pixel line portions in one-to-one correspondence. The image sensor 210 may sequentially perform line scan from the first pixel line portion to the Nth pixel line portion.

In this case, at least some of the 1st channel of the first light source array 110-1, the 1st channel of the second light source array 110-2, the 1st channel of the third light source array 110-3, and the 1st channel of the fourth light source array 110-4 may be connected in series. At least some of the 2nd channel of the first light source array 110-1, the 2nd channel of the second light source array 110-2, the 2nd channel of the third light source array 110-3, and the 2nd channel of the fourth light source array 110-4 may be connected in series. Similarly, at least some of the N-1th channel of the first light source array 110-1, the N-1th channel of the second light source array 110-2, the N-1th channel of the third light source array 110-3, and the N-1th channel of the fourth light source array 110-4 may be connected in series. In addition, at least some of the Nth channel of the first light source array 110-1, the Nth channel of the second light source array 110-2, the Nth channel of the third light source array 110-3, and the Nth channel of the fourth light source array 110-4 may be connected in series.

In this way, when the plurality of light source arrays connected in series for each channel are operated simultaneously, a high-output operation is possible and long-distance sensing is possible. For example, in a case in which each light source array outputs 150 W per channel, when four light source arrays are operated simultaneously, 600 W per channel may be output, enabling long-distance sensing compared to when a single light source array is operated.

According to the embodiment of the present invention, the control unit 400 may control the number of operated light source arrays among the plurality of light source arrays. For example, the control unit 400 may control the number of operated light source arrays among the plurality of light source arrays according to a measurement distance to the target region. For example, when the three-dimensional sensing device 1000 according to the embodiment of the present invention is applied to a short-distance application, a medium-distance application, or a long-distance application, the number of operated light source arrays may vary depending on the distance. For example, the number of operated light source arrays may be controlled to increase as a longer distance is detected, and the number of operated light source arrays may be controlled to decrease as a shorter distance is detected. For example, when the three-dimensional sensing device 1000 is applied to a long-distance application, all of the first to fourth light source arrays 110-1 to 110-4 may be operated, and when the three-dimensional sensing device 1000 is applied to a short-distance application, only the first light source array 110-1 may be operated.

Meanwhile, according to the embodiment of the present invention, the lens group 120 may be disposed above the plurality of light source arrays 110 and include a plurality of lenses disposed sequentially in a direction from the optical member 130 toward the plurality of light source arrays 110. For example, the lens group 120 may include five lenses disposed sequentially in a direction from the optical member 130 toward the plurality of light source arrays 110. In this specification, the lens group 120 may be referred to as a collimator because the lens group 120 collects the light output from the plurality of light source arrays 110 and outputs the collected light.

According to the embodiment of the present invention, the lens group 120 may include a first lens 121 that is disposed closest to the optical member 130 and has a convex shape on both sides, and a second lens 122 that is disposed closest to the first lens 121 and has a concave shape on both sides. According to the embodiment of the present invention, the lens group 120 may further include at least one lens 123 disposed between the second lens 122 and the light source 110. In this case, the diameter or effective diameter of each of the first lens 121 and the second lens 122 may be smaller than the diameter or effective diameter of the at least one lens 123.

According to the embodiment of the present invention, the first lens 121 and the second lens 122 serve to collect the light output from the plurality of light source arrays 110, and the at least one lens 123 serves to correct chromatic aberration.

According to the embodiment of the present invention, the optical member 130 may be disposed above the lens group 120. Here, the optical member 130 may be referred to as a diffusion member or a diffuser.

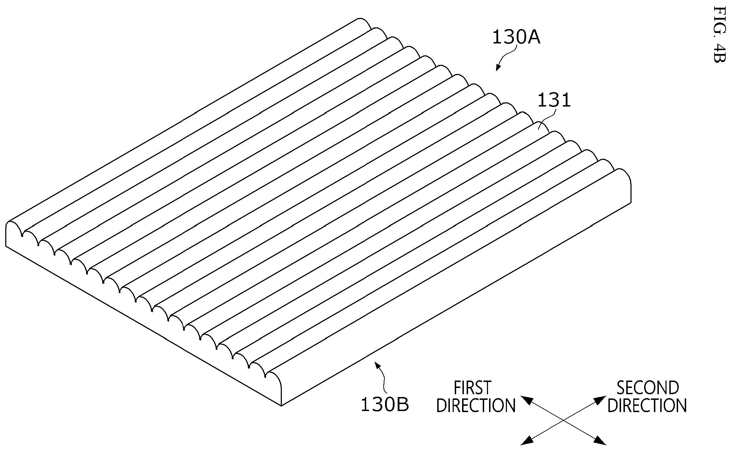

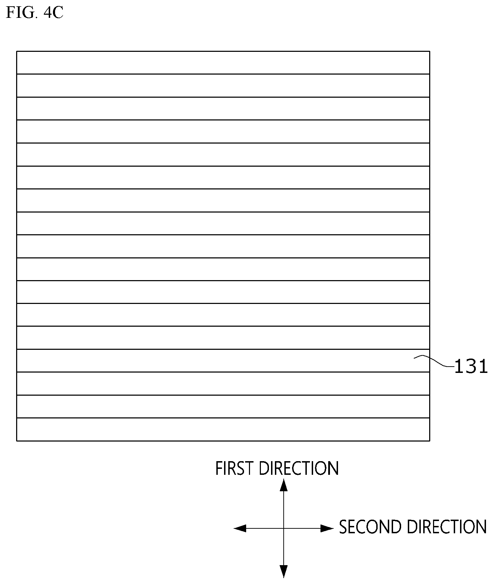

The optical member 130 includes a first surface 130A disposed to face the plurality of light source arrays 110 and a second surface 130B opposite to the first surface 130A. For describing the detailed structures of the first surface 130A and the second surface 130B, FIG. 4A illustrates the first surface 130A facing downward, FIG. 4B illustrates the first surface 130 facing upward by reversing the optical member of FIG. 4A by 180 degrees, and FIG. 4C illustrates a plan view of the first surface 130A.

According to the embodiment of the present invention, a plurality of convex patterns 131 may be disposed on the first surface 130A of the optical member 130, the second surface 130B of the optical member 130 may be a flat surface, and each of the plurality of convex patterns 131 may extend to have a long axis in a direction parallel to the second direction. More specifically, according to the embodiment of the present invention, each of the plurality of convex patterns 131 may have a semi-cylindrical shape extending in the second direction, and the plurality of convex patterns 131 may be disposed adjacent to each other in the first direction perpendicular to the second direction.

According to the embodiment of the present invention, an angle of view in the first direction of the plurality of light source arrays 110 may be determined by the optical member 130. According to the embodiment of the present invention, the angle of view in the first direction may be the same regardless of the number of operated light source arrays among the plurality of light source arrays 110. For example, the angle of view in the first direction of the plurality of light source arrays 110 according to the embodiment of the present invention may be 120 degrees, but the present invention is not limited thereto.

According to the embodiment of the present invention, an angle of view in the second direction of the plurality of light source arrays 110 may be determined by at least one of the number and position of operated channels among the plurality of channels included in each light source array 110. For example, the angle of view in the second direction when all of the plurality of channels included in each light source array are operated may be wider than that when some of the plurality of channels included in each light source array are operated.

To this end, at least some of the plurality of channels may be connected in parallel. Additionally, the area of an effective region of the lens group 120 serving as a collimator may be greater than the area of the plurality of light source arrays 110. That is, when the lens group 120 is disposed such that the effective region of the lens group 120 serving as a collimator covers all of the plurality of light source arrays 110, the angle of view in the second direction may be controlled according to the number of operated channels among the plurality of channels.

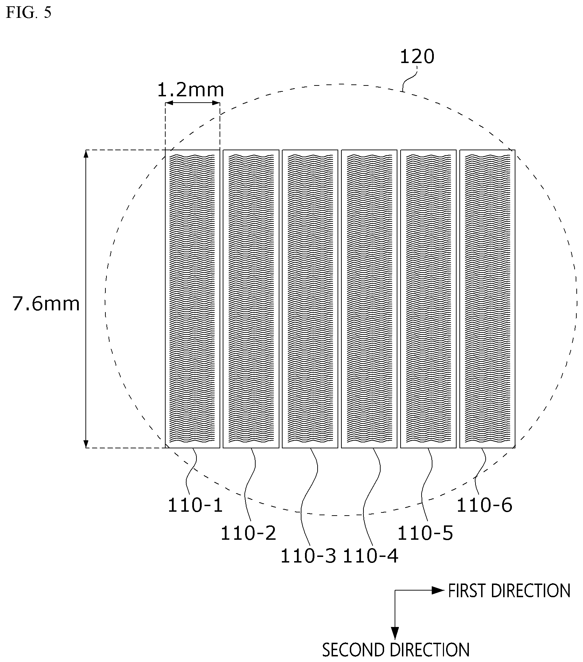

FIG. 5 shows an example in which the areas of the plurality of light source arrays and the lens group are compared according to the embodiment of the present invention.

FIG. 5 shows an example in which each light source array has an effective size of 1.2 mm in the first direction and 7.6 mm in the second direction and six light source arrays are spaced 50 $\mu$m from each other. In this case, when the lens group 120 is disposed to cover all six light source arrays, the angle of view in the second direction may be controlled according to the number of operated channels among the plurality of channels.

According to the embodiment of the present invention, the control unit 400 may control at least one of the number and position of operated channels among the plurality of channels included in each light source array. For example, the control unit may control at least one of the number and position of operated channels among the plurality of channels according to the position of the target region, the length in the second direction of the target region, etc.

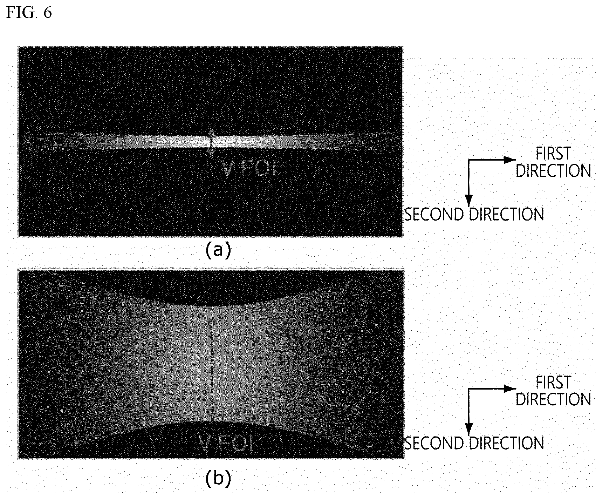

Table 1 shows a result of simulating the angle of view in the second direction according to the number of operated channels, FIG. 6A shows a result of simulating the angle of view in the second direction when 26th to 31st channels among 1st to 56th channels are operated, and FIG. 6B shows a result of simulating the angle of view in the second direction when all the 1st to 56th channels are operated.

[Table 1]

| Number of channels | Angle of view in second direction (deg) |
|---|---|
| 2 | 0.6 |
| 4 | 1.9 |
| 6 | 3,2 |
| 8 | 4.4 |

(continued)

| Number of channels | Angle of view in second direction (deg) |
| --- | --- |
| 10 | 5.6 |
| 12 | 6.9 |
| 14 | 8.2 |
| 16 | 9.5 |
| 18 | 10.7 |
| 20 | 11.9 |
| 22 | 13.2 |
| 24 | 14.5 |
| 26 | 15.8 |
| 28 | 16.9 |
| 30 | 18.2 |
| 32 | 19.5 |
| 34 | 20.8 |
| 36 | 22.0 |
| 38 | 23.2 |
| 40 | 24.5 |
| 42 | 25.8 |
| 44 | 27.0 |
| 46 | 28.3 |
| 48 | 29.5 |
| 50 | 30.8 |
| 52 | 32.0 |
| 54 | 33.3 |
| 56 | 35.0 |

Referring to Table 1 and FIGS. 6A and 6B, it can be seen that the angle of view in the first direction is constant regardless of the number of operated channels and the angle of view in the second direction varies depending on the number of operated channels.

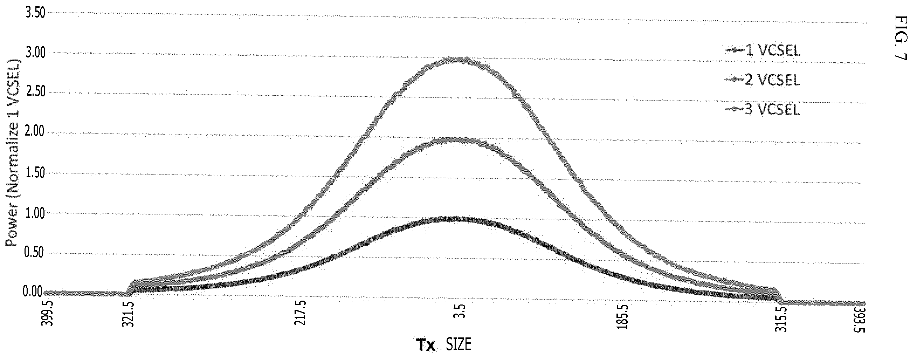

FIG. 7 shows a result of simulating the power of light output according to the number of operated light source arrays among the plurality of light source arrays according to the embodiment of the present invention.

Referring to FIG. 7, it can be seen that when one light source array, two light source arrays, or three light source arrays are operated, the power of the output light increases as the number of the light source arrays increases. Accordingly, it can be seen that the possibility of long-distance sensing increases as the number of operated light sources increases.

According to another embodiment of the present invention, it is intended to increase the resolution of the depth information using an addressable light source array.

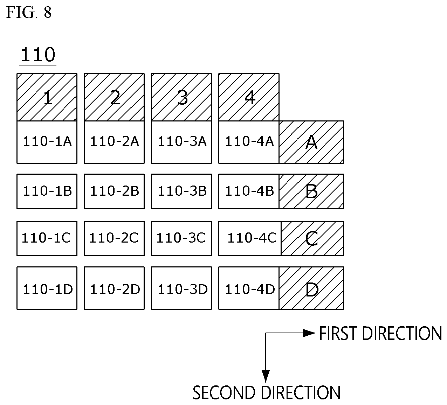

Referring to FIG. 8, the light source 110 includes a plurality of light source arrays 110-1A, 110-1B, ..., and 110-4D disposed in a matrix form. For convenience of description, it is illustrated that the number of the plurality of light source arrays is sixteen, but the present invention is not limited thereto, and the number of the plurality of light source arrays may be two or more.

According to the embodiment of the present invention, the plurality of light source arrays 110-1A, 110-1B, ..., and 110-4D may be VCSELs implemented on one chip. Accordingly, each light source array may be referred to as a sub-VCSEL.

The plurality of light source arrays 110-1A, 110-1B, ..., and 110-4D may be spaced apart from each other. The separation distance between two adjacent light source arrays may be in the range of 10 $\mu$m to 100 $\mu$m, preferably 20 $\mu$m to 80 $\mu$m, and more preferably 30 $\mu$m to 60 $\mu$m.

According to the embodiment of the present invention, each of the plurality of light source arrays 110-1A, ..., and 110-4D may be set to be operated independently. Each of the plurality of light source arrays 110-1A, ..., and 110-4D is operated by a plurality of first signal lines through which electrical signals are applied in the first direction and a plurality of second signal lines through which electrical signals are applied in the second direction perpendicular to the first direction. For example, in the plurality of light source arrays 110-1A, ..., and 110-4D, negative signal lines of A to D rows and positive signal lines of first to fourth columns are disposed to intersect with each other, and each of the plurality of light source arrays 110-1A, ..., and 110-4D may be operated independently according to electrical signals applied to the negative signal lines of the A to D rows and the positive signal lines of the first to fourth columns.

For example, when an electrical signal is applied to the positive signal line of the first column and the negative signal line of the A row, the light source array 110-1A may be operated, and when an electrical signal is applied to the positive signal line of the fourth column and the negative signal line of the D row, the light source array 110-4D may be operated.

In this way, since each of the plurality of light source arrays is set to be operated independently, the light source 110 according to the embodiment of the present invention may be referred to as an addressable light source array or an addressable VCSEL array.

According to the embodiment of the present invention, the control unit 400 sequentially operates different light source arrays in the plurality of light source arrays 110-1A, ..., and 110-4D according to a combination of some of the plurality of first signal lines and some of the plurality of second signal lines. For example, the control unit 400 may sequentially operate the light source arrays 110-1A, 110-1B, ..., 110-4C, and 110-4D. Alternatively, the control unit 400 may sequentially operate some of the plurality of light source arrays 110-1A, ..., and 110-4D.

In addition, the information generating unit 300 synthesizes input light signals for different light source arrays operated sequentially to generate depth information on the target region. For example, when the light source arrays 110-1A, 110-2B, 110-3C, and 110-4D are operated sequentially, the information generating unit 300 may synthesize the input light signal for the light source array 110-1A, the input light signal for the light source array 110-2B, the input light signal for the light source array 110-3C, and the input light signal for the light source array 110-4D to generate the depth information. Synthesis of the input light signals may be performed using a super resolution (SR) algorithm, or the like. Accordingly, since instantaneous power consumption does not become excessively high, power consumption can be reduced, and high depth information resolution can be obtained without causing harm to a user's eyes.

Here, according to the embodiment of the present invention, the light emitting unit 100 may be a structured light module that outputs a dot pattern.

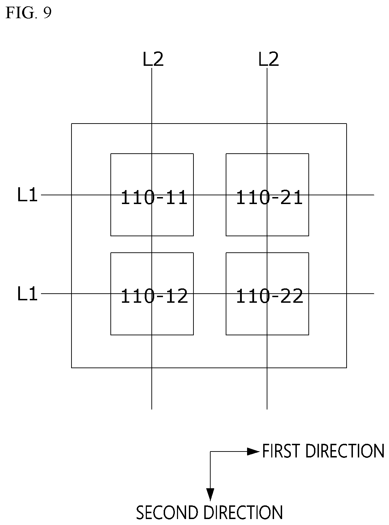

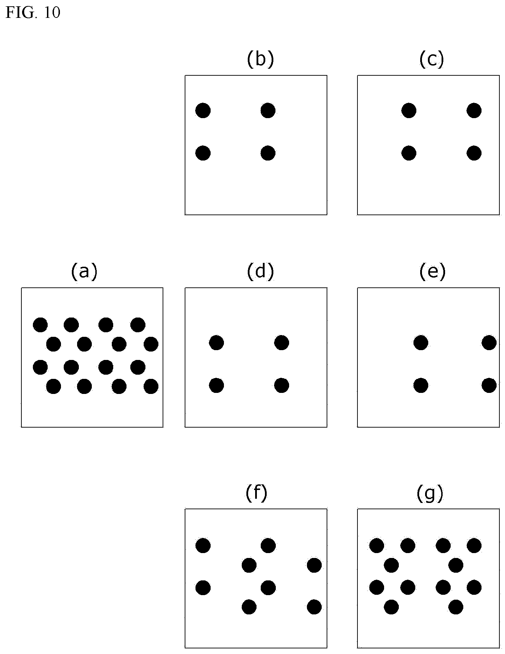

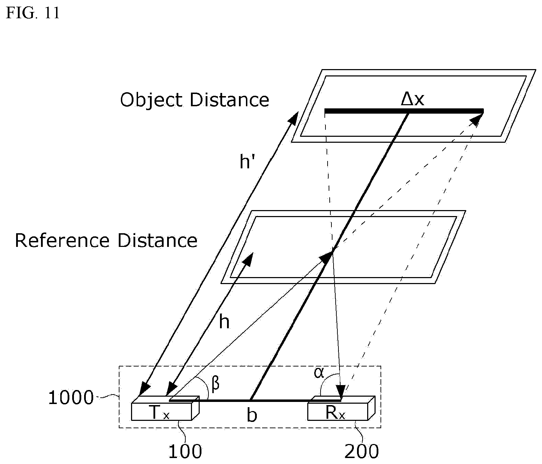

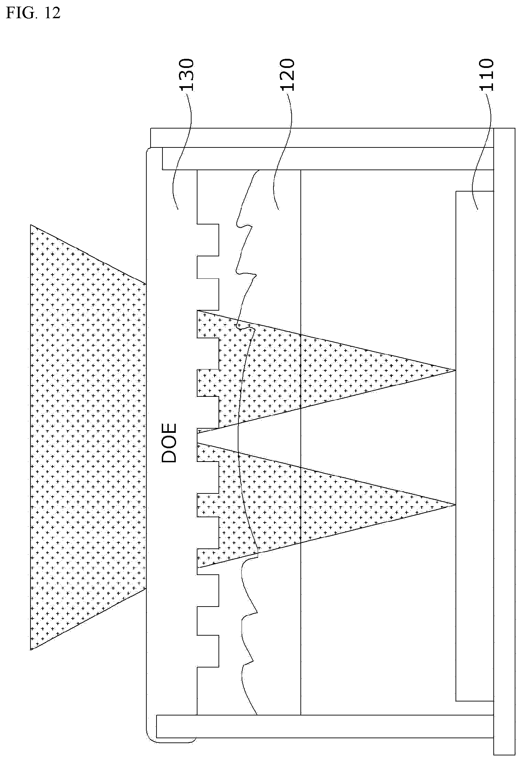

FIG. 9 is a layout diagram of a light source according to another embodiment of the present invention, FIGS. 10A to 10G shows examples of dot patterns output from the light source of FIG. 9, FIG. 11 is a view describing the principle of generating depth information using a dot pattern, and FIG. 12 is a cross-sectional view of a light emitting unit including the light source of FIG. 9. Duplicate description of the same content as described with reference to FIGS. 1 to 8 is omitted.

Referring to FIG. 9, a light source 110 includes a first light source array 110-11, a second light source array 110-21, a third light source array 110-12, and a fourth light source array 110-22 disposed in a matrix form.

FIG. 10B shows an example of a dot pattern output when the first light source array 110-11 is operated, FIG. 10C shows an example of a dot pattern output when the second light source array 110-21 is operated, FIG. 10D shows an example of a dot pattern output when the third light source array 110-12 is operated, and FIG. 10E shows an example of a dot pattern output when the fourth light source array 110-22 is operated. In this way, the dot patterns output from the first light source array 110-11, the second light source array 110-21, the third light source array 110-12, and the fourth light source array 110-22 may not overlap in the target region.

Referring to FIG. 11, a distance (an object distance, h') between the three-dimensional sensing device 1000 and the object in a target region may vary depending on the disparity (Δx) between dots forming the dot pattern. Accordingly, the accuracy of disparity may affect the accuracy of depth information. More specifically, the extraction of depth information using the dot pattern may be performed according to the following mathematical expressions.

[Mathematical Expression 1]

$$b:\Delta x = h:(h'-h)$$

[Mathematical Expression 2]

$$\Delta x = \frac{b}{h}(h'-h)$$

[Mathematical Expression 3]

$$h' = h\left(\frac{\Delta x}{b} - 1\right)$$

Here, h is the reference distance, h' is the object distance in the target region, b is the length of a baseline, and $\Delta x$ is the disparity.

Referring to Mathematical Expressions 1 to 3, it can be seen that the length of the baseline b affects the disparity, and the disparity per unit length of the object distance h' increases as the field of view (FOV) decreases and the baseline increases. When the object size is smaller than half of the baseline, dots in a predetermined pattern may pass adjacent points by the disparity, and the disparity may decrease as the object distance in the target region increases. Accordingly, for calculating accurate depth information, it is necessary to extract the disparity based on the center of the dots, and it is important that the dots radiated on the object in the target region do not overlap each other.

FIG. 10A shows an example of a dot pattern output when the first light source array 110-11, the second light source array 110-21, the third light source array 110-12, and the fourth light source array 110-22 are operated simultaneously, FIG. 10F shows an example of a dot pattern output when the first light source array 110-11 and the fourth light source array 110-22 are operated simultaneously, and FIG. 10G shows an example of a dot pattern output when the first light source array 110-11, the second light source array 110-21, and the third light source array 110-12 are operated simultaneously.

As can be seen from FIGS. 10A to 10G, as the number of operated light source arrays increases, the number of dots radiated in the target region increases. As the number of dots radiated in the target region increases, the amount of depth information can increase, and thus the resolution of the depth information can increase. However, since the dots radiated on the object are more likely to overlap, it may be difficult to extract accurate disparity.

In the embodiment of the present invention, the first light source array 110-11, the second light source array 110-21, the third light source array 110-12, and the fourth light source array 110-22 may be operated sequentially, and the input light signals from each light source array may be synthesized. Accordingly, since the first light source array 110-11, the second light source array 110-21, the third light source array 110-12, and the fourth light source array 110-22 are operated simultaneously, high depth information resolution is obtained. In addition, since dots radiated on the object are prevented from overlapping, accurate disparity extraction is possible. In addition, power consumption can be reduced, and it is possible not to cause harm to the user's eyes.

The first light source array 110-11, the second light source array 110-21, the third light source array 110-12, and the fourth light source array 110-22 may be operated sequentially according to a combination of electrical signals applied to a plurality of first signal lines L1 and a plurality of second signal lines L2.

Meanwhile, according to the embodiment of the present invention, a lens group 120 and an optical member 130 may be disposed above the first light source array 110-11, the second light source array 110-21, the third light source array 110-12, and the fourth light source array 110-22 as described with reference to FIG. 2. In this case, the optical member 130 may include a diffractive optical element (DOE) as illustrated in FIG. 12, and the DOE may replicate a dot pattern output from each of the first light source array 110-11, the second light source array 110-21, the third light source array 110-12, and the fourth light source array 110-22.

In this way, while the DOE that replicates a dot pattern is disposed above the first light source array 110-11, the second light source array 110-21, the third light source array 110-12, and the fourth light source array 110-22, when the first light source array 110-11, the second light source array 110-21, the third light source array 110-12, and the fourth light source array 110-22, which output dot patterns that do not overlap, are operated sequentially, the density of dots in the target region can be maximized, thereby increasing the spatial resolution.

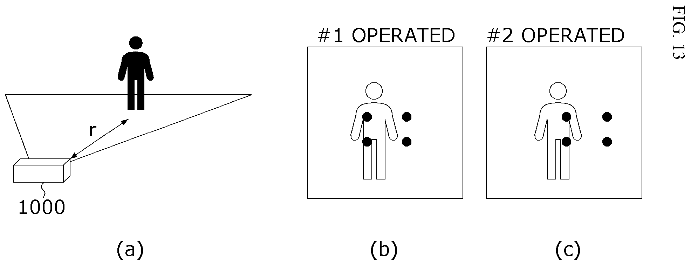

FIG. 13 shows an application example of the three-dimensional sensing device including the light emitting unit of FIG. 12.

Referring to FIG. 13A, a control unit 400 of the three-dimensional sensing device 1000 may control the number of different light source arrays, which are operated sequentially, according to the distance to the target region. For example, the control unit 400 of the three-dimensional sensing device 1000 may control the number of operated light source arrays among the plurality of light source arrays according to a measurement distance r to the target region. For example, when the three-dimensional sensing device 1000 according to the embodiment of the present invention is applied to a short-distance application, a medium-distance application, or a long-distance application, the number of operated light source arrays may vary depending on the distance. As the distance r from the three-dimensional sensing device 1000 to the target region increases, the area of the target region entering the image sensor 210 increases, and the intensity of light input to the image sensor 210 weakens in inverse proportion to the square of the distance. Accordingly, when the number of operated light source arrays increases for long-distance sensing, the dot density and light intensity can be maintained high even at a long distance, thereby obtaining high depth information resolution.

As shown in FIG. 13B and FIG. 13C, when dot patterns are radiated on a person at a long distance, a dot pattern radiated from a light source array #1 and a dot pattern radiated from a light source array #2 may not overlap. When the light source array #1 and the light source array #2 are operated sequentially and an input light signal from the light source array #1 and an input light signal from the light source array #2 are synthesized, the depth information resolution in long-distance sensing can be further improved.

According to still another embodiment of the present invention, the light emitting unit 100 may output both a dot pattern and a surface pattern.

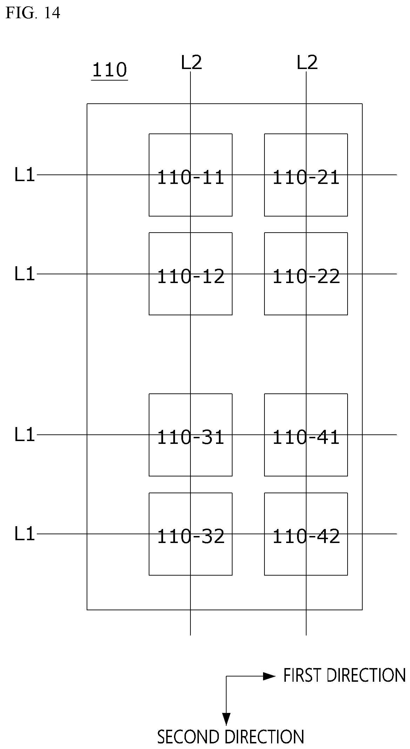

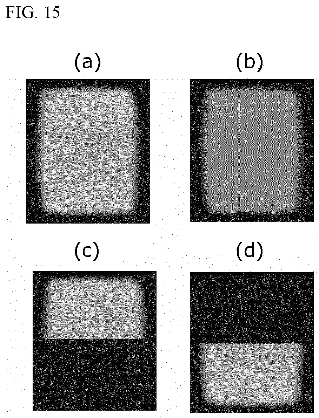

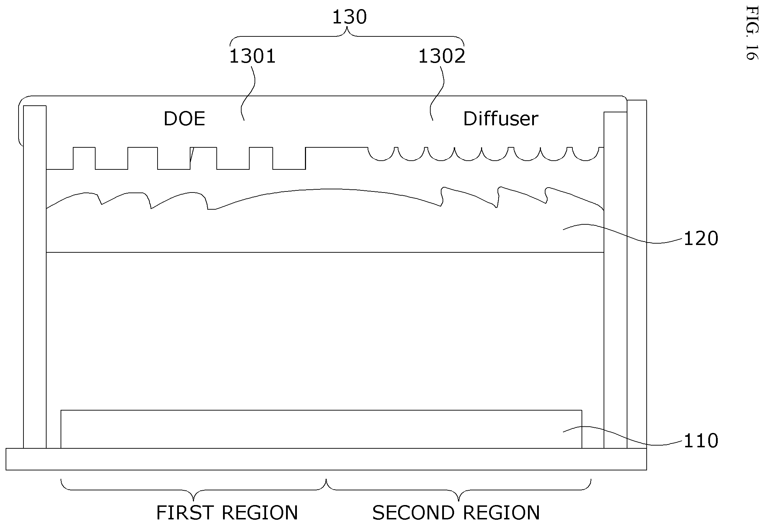

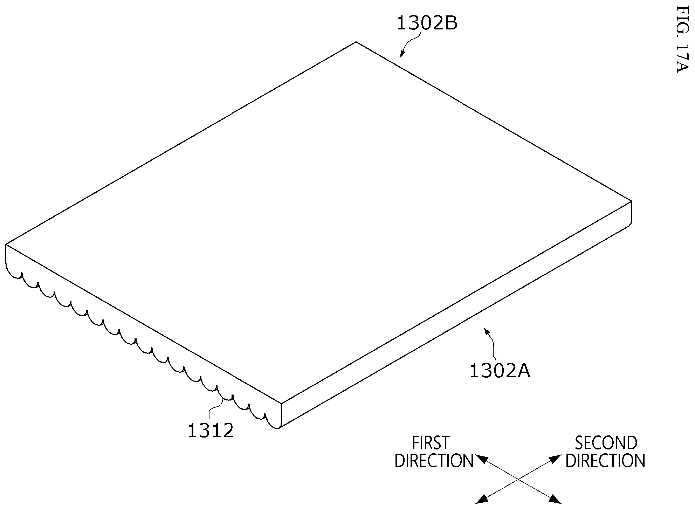

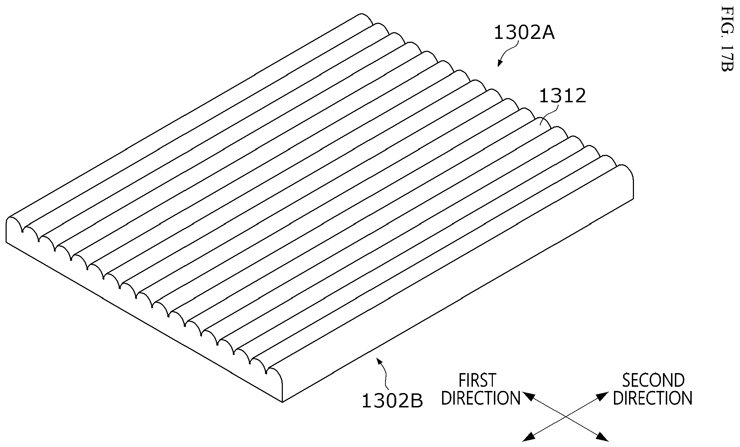

FIG. 14 is a layout diagram of a light source according to still another embodiment of the present invention, and FIGS. 15A to 15D show examples of a surface pattern output from the light source of FIG. 14. FIG. 16 is a cross-sectional view of a light emitting unit including the light source of FIG. 14, and FIG. 17 shows an example of a diffusion member included in the light emitting unit of FIG. 16. Duplicate description of the same content as described with reference to FIGS. 1 to 13 is omitted. Regarding the dot pattern, duplicate description of the same content as described with reference to FIGS. 9 to 13 is omitted.

Referring to FIG. 14, a light source 110 includes a first light source array 110-11, a second light source array 110-21, a third light source array 110-12, a fourth light source array 110-22, a fifth light source array 110-31, a sixth light source array 110-41, a seventh light source array 110-32, and an eighth light source array 110-42 disposed in a matrix form. The first light source array 110-11, the second light source array 110-21, the third light source array 110-12, and the fourth light source array 110-22 are the first to fourth light source arrays described with reference to FIGS. 9 to 12, and therefore duplicate description thereof is omitted.

FIG. 15A shows an example of a surface pattern output when the fifth light source array 110-31, the sixth light source array 110-41, the seventh light source array 110-32, and the eighth light source array 110-42 are all operated, FIG. 15B shows an example of a surface pattern output when the fifth light source array 110-31 and the seventh light source array 110-32 are operated simultaneously, or the sixth light source array 110-41 and the eighth light source array 110-42 are operated simultaneously, FIG. 15C shows an example of a surface pattern output when the fifth light source array 110-31 and the sixth light source array 110-41 are operated simultaneously, and FIG. 15D shows an example of a surface pattern output when the seventh light source array 110-32 and the eighth light source array 110-42 are operated simultaneously. All or some of the fifth light source array 110-31, the sixth light source array 110-41, the seventh light source array 110-32, and the eighth light source array 110-42 may be operated according to a combination of electrical signals applied to a plurality of first signal lines L1 and a plurality of second signal lines L2.

To this end, as illustrated in FIG. 16, an optical member 130 disposed above the first light source array 110-11, the second light source array 110-21, the third light source array 110-12, and the fourth light source array 110-22 in a first region may be a DOE 1301, and the optical member 130 disposed above the fifth light source array 110-31, the sixth light source array 110-41, the seventh light source array 110-32, and the eighth light source array 110-42 in a second region may be a diffusion member 1302.

In addition, a lens group 120 may be disposed above a plurality of light source arrays and include a plurality of lenses disposed sequentially in a direction from the diffusion member 1302 toward the plurality of light source arrays. For example, the lens group 120 may include five lenses disposed sequentially in a direction from the diffusion member 1302 toward the plurality of light source arrays. In this specification, the lens group 120 may be referred to as a collimator because the lens group 120 collects the light output from the plurality of light source arrays and outputs the collected light.

The lens group 120 may be disposed above the fifth to eighth light source arrays that output a surface pattern as well as the first to fourth light source arrays that output a dot pattern and collect light output from the first to fourth light source arrays. To this end, the area of an effective region of the lens group 120 may be greater than the area of the first to eighth light source arrays.

Referring to FIG. 17, the diffusion member 1302 includes a first surface 1302A disposed to face the fifth to eighth light source arrays 110-31, 110-41, 110-32, and 110-42 and a second surface 1302B opposite to the first surface 1302A. For describing the detailed structures of the first surface 1302A and the second surface 1302B, FIG. 17A illustrates the first surface 1302A facing downward, and FIG. 17B illustrates the first surface 1302A facing upward by reversing the diffusion member of FIG. 17A by 180 degrees.

According to the embodiment of the present invention, a plurality of convex patterns 1312 may be disposed on the first surface 1302A of the diffusion member 1302, the second surface 1302B of the diffusion member 1302 may be a flat surface, and each of the plurality of convex patterns 1312 may extend to have a long axis in a direction parallel to the second direction. More specifically, according to the embodiment of the present invention, each of the plurality of convex patterns 1312 may have a semi-cylindrical shape extending in the second direction, and the plurality of convex patterns 1312 may be disposed adjacent to each other in the first direction perpendicular to the second direction.

According to the embodiment of the present invention, an angle of view in the first direction of the fifth to eighth light source arrays 110-31, 110-41, 110-32, and 110-42 may be determined by the diffusion member 1302, and a surface pattern evenly distributed in the first direction can be obtained by the diffusion member 1302. According to the embodiment of the present invention, the angle of view in the first direction may be the same regardless of the number of operated light source arrays among the fifth to eighth light source arrays 110-31, 110-41, 110-32, and 110-42.

According to the embodiment of the present invention, an angle of view in the second direction of the fifth to eighth light source arrays 110-31, 110-41, 110-32, and 110-42 may be determined by the number or position of operated light source arrays among the fifth to eighth light source arrays 110-31, 110-41, 110-32, and 110-42. For example, as illustrated in FIGS. 15C and 15D, the angle of view in the second direction when only the fifth light source array 110-31 and the sixth light source array 110-41 are operated, or when only the seventh light source array 110-32 and the eighth light source array 110-42 are operated, may be narrower than that when all of the fifth to eighth light source arrays 110-31, 110-41, 110-32, and 110-42 are operated.

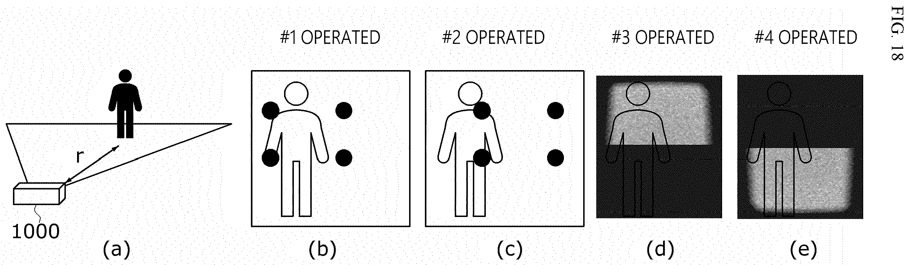

FIG. 18 shows an application example of a three-dimensional sensing device including the light emitting unit of FIG. 16.

Referring to FIG. 18A, a control unit 400 of a three-dimensional sensing device 1000 may control at least one of the number and type of different light source arrays, which are operated sequentially, according to the distance r to the target region. For example, the control unit 400 may control at least one of the number and type of operated light source arrays among the plurality of light source arrays according to a measurement distance to the target region. For example, when the three-dimensional sensing device 1000 according to the embodiment of the present invention is applied to a short-distance application, a medium-distance application, or a long-distance application, at least one of the number and type of operated light source arrays may vary depending on the distance.

As illustrated in FIGS. 18B to 18E, in a case in which dot patterns are radiated on a person at a long distance, when light source arrays #1 and #2, which radiate dot patterns that do not overlap, and light source arrays #3 and #4, which radiate surface patterns in different regions, are operated sequentially, and the input light signals from the light source arrays #1 to #4 are synthesized, the depth information resolution in long-distance sensing can be further improved.

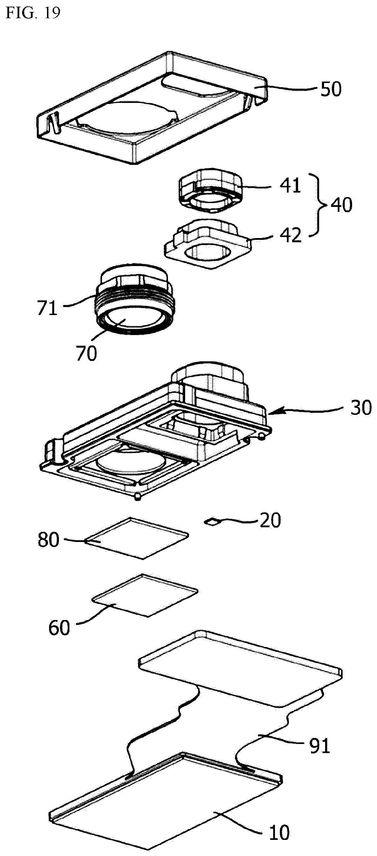

FIG. 19 is an exploded view of a LiDAR device according to an embodiment of the present invention.

A LiDAR device may include a light emitting unit and a light receiving unit. Since components such as a substrate 10, a holder 30, and a shield can 50 are formed integrally and are commonly used for the light emitting unit and the light receiving unit, it may be difficult to distinguish between the light emitting unit and the light receiving unit. In this case, each of the above components can be understood as a component of each of the light emitting unit and light receiving unit. However, as a modified example, common components such as the substrate 10, the holder 30, and the shield can 50 may be provided separately for the light emitting unit and the light receiving unit.

The light emitting unit may include a substrate 10, a light source 20, a holder 30, a diffusion member 41, a diffuser ring 42, and a shield can 50. The light receiving unit may include a substrate 10, a sensor 60, a filter 80, a holder 30, a lens 70, a barrel 71, and a shield can 50.

The substrate 10 may include a PCB. The substrate 10 can be connected to a connector through a flexible PCB (FPCB) 91. The substrate 10 and FPCB 91 can be formed as a rigid flexible PCB (RFPCB). The light source 20 and the sensor 60 may be disposed on the substrate 10. The substrate 10 may be disposed under the holder 30. The substrate 10 may include a terminal. The terminal of the substrate 10 may be coupled to a coupling portion of the shield can 50. The terminal of the substrate 10 may include a plurality of terminals. The terminal of the substrate 10 may include two terminals.

The light source 20 may be disposed above the substrate 10. The light source 20 may be disposed in contact with the substrate 10. The light source 20 may be disposed over the substrate 10. The light source 20 may be disposed on the substrate 10. The light source 20 may correspond to the light source 110 described above.

The holder 30 may be disposed above the substrate 10. The holder 30 may be disposed in contact with the substrate 10. The holder 30 may be disposed over the substrate 10. The holder 30 may be disposed on the substrate 10. The holder 30 may be fixed to the substrate 10 with an adhesive. The holder 30 may accommodate the light source 20, a diffuser module 40, the sensor 60, and the filter 80 therein. The holder 30 may be a plastic injection molded product. The holder 30 may be formed by injection molding.

The diffuser module 40 may include a diffusion member 41 and a diffuser ring 42. The diffuser module 40 may be formed integrally as in a modified example, but in the present embodiment, the diffuser module may be manufactured separately as the diffusion member 41 and the diffuser ring 42 to increase moldability during injection molding. The diffusion member 41 and the diffuser ring 42 can be separated from each other.

The diffusion member 41 may be a diffuser lens. The diffusion member 41 may correspond to the diffusion member 120 and diffusion member 400 described above. The diffusion member 41 may be disposed in the holder 30. The diffusion member 41 may be coupled to the holder 30. The diffusion member 41 may be fixed to the holder 30. The diffusion member 41 may be disposed on an optical path of light emitted from the light source 20. The diffusion member 41 may be disposed above the light source 20. The diffusion member 41 may be disposed over the light source 20. The diffusion member 41 may be a plastic injection molded product. The diffusion member 41 may be formed by plastic injection molding. The height of the top of the diffusion member 41 may correspond to the height of the top of the lens 70. The diffusion member 41 may be inserted into the holder 30 in an upward direction of a vertical direction and combined with the holder 30. In this case, the upward direction may be a direction from a lower portion of the holder 30 toward an upper portion of the holder 30. A part of the diffusion member 41 may overlap the holder 30 in the upward direction.

The diffuser ring 42 may be disposed in the holder 30. The diffuser ring 42 may be fixed to the holder 30. The diffuser ring 42 may be coupled to the holder 30. The diffuser ring 42 may be disposed under the diffusion member 41. The diffuser ring 42 may support the diffusion member 41. The diffuser ring 42 may be in contact with the diffusion member 41. The diffuser ring 42 may be a plastic injection molded product. The diffuser ring 42 may be formed by plastic injection molding.

The shield can 50 may cover a body of the holder 30. The shield can 50 may include a cover. The shield can 50 may include a cover can. The shield can 50 may be nonmagnetic. The shield can 50 may be formed of a metal material. The shield can 50 may be formed from a metal plate. The shield can 50 may be electrically connected to the substrate 10. The shield can 50 may be connected to the substrate 10 through solder balls. Through this, the shield can 50 may be grounded. The shield can 50 can block electromagnetic interference (EMI). In this case, the shield can 500 may be called an "EMI shield can." As a high voltage is used in an optical device, EMI may increase. In the present embodiment, the shield can 50 can block EMI.

The sensor 60 may be disposed on the substrate 10. The sensor 60 may be disposed on the other side of a partition wall of the holder 30 on the substrate 10. That is, the sensor 60 may be disposed on a side opposite to the light source 20 based on the partition wall of the holder 30. The sensor 60 may detect infrared rays. The sensor 60 may detect a ray having a specific wavelength among the infrared rays. The sensor 60 may detect light passing through the filter 80. The sensor 60 may detect light in a wavelength band of the light source 20. Through this, the sensor 60 may detect the light emitted from the light source 20 and reflected by a subject, thereby sensing three-dimensional image information on the subject. An effective sensing region of the sensor 60 is disposed to correspond to the diffusion member 41, but the sensor 60 may be disposed to be biased toward the partition wall as a whole. A circuit pattern of the sensor 60 and the like may be disposed in a portion of the sensor 60 that is biased toward the partition wall.

The lens 70 may be fixed in the barrel 71. The lens 70 may be a plastic injection molded product. The lens 70 may be formed by plastic injection molding. The lens 70 may include a plurality of lenses.

The filter 80 may be disposed between the lens 70 and the sensor 60. The filter 80 may be a band pass filter through which light having a specific wavelength is passed. The filter 80 may allow infrared rays to be passed. The filter 80 may allow a ray having a specific wavelength to be passed among the infrared rays. The filter 80 may allow light in a wavelength band, which is emitted from the light source 20, to be passed. The filter 80 may block visible light. The filter 80 may be coupled to the holder 30. A groove having a size corresponding to that of the filter 80 is formed in the holder 30, and the filter 80 may be inserted into the groove and fixed to the groove with an adhesive. An adhesive injection groove for injecting adhesive between the filter 80 and the holder 30 may be formed in the groove of the holder 30. The filter 80 may be disposed at a position lower than a position of the diffuser ring 42.

Although the above description has referred to embodiments, the embodiments are merely examples and do not limit the present invention, and those skilled in the art to which the present invention pertains will appreciate that various modifications and applications not exemplified above are possible without departing from the essential characteristics of the present embodiment. For example, each component specifically shown in the embodiments may be implemented with modifications. In addition, the differences relating to these modifications and applications should be construed as being included within the scope of the present invention as defined in the appended claims.

**Claims**

1. A light output device comprising:

   a plurality of light source arrays disposed sequentially in a first direction perpendicular to an optical axis direction;
   a collimation lens disposed above the plurality of light source arrays; and
   a diffusion member disposed above the collimation lens,
   wherein each light source array includes a plurality of channels disposed sequentially in a second direction perpendicular to the optical axis direction and the first direction,
   each of the plurality of light source arrays is set to be operated independently, and
   each of the plurality of channels is set to be operated independently.

2. The light output device of claim 1, wherein the plurality of light source arrays include a first light source array and a second light source array,

   each of the first light source array and the second light source array includes $1^{st}$ to $n^{th}$ channels disposed sequentially, and
   the $1^{st}$ to $n^{th}$ channels of the first light source array are connected to the $1^{st}$ to $n^{th}$ channels of the second light source array, respectively, in series.

3. The light output device of claim 2, wherein at least some of the 1st to nth channels of the first light source array are connected in parallel.

4. The light output device of claim 1, wherein an area of an effective region of the collimation lens is greater than an area of the plurality of light source arrays.

5. The light output device of claim 1, wherein the diffusion member includes a first surface disposed to face the plurality of light source arrays and a second surface opposite to the first surface, a plurality of convex patterns are disposed on the first surface, and each of the plurality of convex patterns has a long axis in a direction parallel to the second direction.

6. The light output device of claim 1, wherein the plurality of light source arrays are implemented on a single chip.

7. A three-dimensional sensing device comprising:

a light emitting unit that generates an output light signal and irradiates a target region with the output light signal;
a light receiving unit that receives an input light signal reflected from the target region;
an information generating unit that generates information on the target region using the input light signal input to the light receiving unit; and
a control unit that controls the light emitting unit, the light receiving unit, and the information generating unit, wherein the light emitting unit includes:

a plurality of light source arrays disposed sequentially in a first direction perpendicular to an optical axis direction;
a collimation lens disposed above the plurality of light source arrays; and
a diffusion member disposed above the collimation lens,
wherein each light source array includes a plurality of channels disposed sequentially in a second direction perpendicular to the optical axis direction and the first direction,
each of the plurality of light source arrays is set to be operated independently, and
each of the plurality of channels is set to be operated independently.

8. The three-dimensional sensing device of claim 7, wherein the control unit controls at least one of the number of operated light source arrays among the plurality of light source arrays and the number of operated channels among the plurality of channels.

9. The three-dimensional sensing device of claim 8, wherein the control unit controls the number of operated light source arrays among the plurality of light source arrays according to a measurement distance to the target region.

10. The three-dimensional sensing device of claim 8, wherein the control unit controls the number of operated channels among the plurality of channels according to a required angle of view in the second direction.

FIG. 1

<u>1000</u>

| | |
|---|---|
| LIGHT EMITTING UNIT | 100 |
| LIGHT RECEIVING UNIT | 200 |
| INFORMATION GENERATING UNIT | 300 |
| CONTROL UNIT | 400 |

FIG. 2

FIG. 3

FIG. 4A

130B

130A

131

FIRST DIRECTION    SECOND DIRECTION

EP 4 600 692 A1

FIG. 4B

130A

131

130B

FIRST DIRECTION

SECOND DIRECTION

FIG. 4C

131

FIRST DIRECTION

SECOND DIRECTION

FIG. 5

FIG. 6

(a)

(b)

FIG. 7

FIG. 8

110

| 1 | 2 | 3 | 4 | |
|---|---|---|---|---|
| 110-1A | 110-2A | 110-3A | 110-4A | A |
| 110-1B | 110-2B | 110-3B | 110-4B | B |
| 110-1C | 110-2C | 110-3C | 110-4C | C |
| 110-1D | 110-2D | 110-3D | 110-4D | D |

FIRST DIRECTION

SECOND DIRECTION

FIG. 9

FIG. 10

FIG. 11

Object Distance

$\Delta x$

h'

Reference Distance

h

1000

$\beta$

$T_x$   b   $R_x$

$\alpha$

100   200

EP 4 600 692 A1

FIG. 12

DOE

130

120

110

FIG. 13

(a)

(b) #1 OPERATED

(c) #2 OPERATED

1000

r

FIG. 14

FIG. 15

FIG. 16

FIG. 17A

1302B

1302A

1312

SECOND
DIRECTION

FIRST
DIRECTION

FIG. 17B

FIG. 18

FIG. 19

## INTERNATIONAL SEARCH REPORT

| | International application No. |
|---|---|
| | **PCT/KR2023/015400** |

**A. CLASSIFICATION OF SUBJECT MATTER**

**G01S 7/481**(2006.01)i; **G02B 27/09**(2006.01)i; **G01S 7/484**(2006.01)i; **G01S 17/894**(2020.01)i; **G01S 7/4861**(2020.01)i; **G02B 5/18**(2006.01)i; **G02B 27/30**(2006.01)i

According to International Patent Classification (IPC) or to both national classification and IPC

**B. FIELDS SEARCHED**

Minimum documentation searched (classification system followed by classification symbols)

G01S 7/481(2006.01); G01J 1/44(2006.01); G01S 17/08(2006.01); G01S 17/34(2020.01); G01S 17/86(2020.01); G01S 17/89(2006.01); G01S 17/931(2020.01); G02B 27/00(2006.01); G02B 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(lidar), 어레이(array), 채널(channel), 콜리메이션 렌즈(collimation lens), 확산(diffusion)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0006638 A (OUSTER, INC.) 17 January 2022 (2022-01-17)<br>See paragraphs [0023]-[0090] and figures 1-9. | 1-10 |
| Y | KR 10-2022-0097220 A (ANYCASTING CO., LTD.) 07 July 2022 (2022-07-07)<br>See paragraphs [0065]-[0075] and figures 4-5. | 1-10 |
| A | KR 10-2019-0066220 A (GWANGJU INSTITUTE OF SCIENCE AND TECHNOLOGY) 13 June 2019 (2019-06-13)<br>See paragraphs [0025]-[0053] and figures 1-2. | 1-10 |
| A | KR 10-2022-0124191 A (OURS TECHNOLOGY, LLC.) 13 September 2022 (2022-09-13)<br>See paragraphs [0021]-[0022] and figure 1. | 1-10 |
| A | KR 10-2020-0084863 A (BARAJA PTY LTD) 13 July 2020 (2020-07-13)<br>See paragraphs [0026]-[0031] and figures 2a-2b. | 1-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 January 2024** | **03 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
### Information on patent family members

| International application No. |
|---|
| **PCT/KR2023/015400** |

| Patent document cited in search report | | | Publication date (day/month/year) | Patent family member(s) | | | Publication date (day/month/year) |
|---|---|---|---|---|---|---|---|
| KR | 10-2022-0006638 | A | 17 January 2022 | CN | 114096883 | A | 25 February 2022 |
| | | | | EP | 3969938 | A1 | 23 March 2022 |
| | | | | JP | 2022-533119 | A | 21 July 2022 |
| | | | | US | 2022-0120906 | A1 | 21 April 2022 |
| | | | | WO | 2020-232016 | A1 | 19 November 2020 |
| KR | 10-2022-0097220 | A | 07 July 2022 | | None | | |
| KR | 10-2019-0066220 | A | 13 June 2019 | WO | 2019-112164 | A1 | 13 June 2019 |
| KR | 10-2022-0124191 | A | 13 September 2022 | CN | 115023628 | A | 06 September 2022 |
| | | | | EP | 4094097 | A1 | 30 November 2022 |
| | | | | JP | 2023-511134 | A | 16 March 2023 |
| | | | | US | 2022-0365214 | A1 | 17 November 2022 |
| | | | | WO | 2021-150826 | A1 | 29 July 2021 |
| KR | 10-2020-0084863 | A | 13 July 2020 | AU | 2018-329874 | A1 | 12 March 2020 |
| | | | | CN | 111386472 | A | 07 July 2020 |
| | | | | EP | 3679666 | A1 | 15 July 2020 |
| | | | | JP | 2020-532714 | A | 12 November 2020 |
| | | | | US | 11448764 | B2 | 20 September 2022 |
| | | | | US | 11740361 | B2 | 29 August 2023 |
| | | | | US | 2020-0363633 | A1 | 19 November 2020 |
| | | | | US | 2023-0029264 | A1 | 26 January 2023 |
| | | | | WO | 2019-046895 | A1 | 14 March 2019 |

Form PCT/ISA/210 (patent family annex) (July 2022)